Europäisches Patentamt

European Patent Office

Office européen des brevets

(19)

(11) Publication number: **0 147 469**

**A1**

# (12) EUROPEAN PATENT APPLICATION

published in accordance with Art. 158(3) EPC

(21) Application number: **84902072.2**

(22) Date of filing: **28.05.84**

Data of the international application taken as a basis:

(86) International application number:
**PCT/JP84/00273**

(87) International publication number:
**WO84/04826 (06.12.84 84/28)**

(51) Int. Cl.⁴: **G 05 B 19/02**

(30) Priority: **31.05.83 JP 96291/83**

(43) Date of publication of application:
**10.07.85 Bulletin 85/28**

(84) Designated Contracting States:
**DE FR GB**

(71) Applicant: **FANUC LTD**
**3580, Shibokusa Aza-Komanba Oshino-mura**
**Minamitsuru-gun Yamanashi 401-05(JP)**

(72) Inventor: **FUKUYAMA, Hiroomi**
**719-644, Yano-cho**
**Hachioji-shi Tokyo 192(JP)**

(72) Inventor: **ISOBE, Shinichi**
**Hinodai-Haitsu 516 1-1-1, Hinodai**
**Hino-shi Tokyo 191(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **ROM MODULE FOR SEQUENCE PROGRAM.**

(57) A ROM module for a sequence program provides sequence processing corresponding to a command output from a numerical control unit and outputs the processing result to the machine side. The ROM module is provided with a ROM (102a) for storing a sequence program, a printed circuit board (102) on which the ROM is mounted, a casing (101) housing the printed circuit board, and a connector (102e) which is attached to the printed circuit board and is exposed on the outside of the casing. Sequence programs can be read out from the ROM and written thereinto through the connector.

FIG.5(A)

FIG.5(B)

## DESCRIPTION

ROM MODULE FOR SEQUENCE PROGRAMS

### Technical Field

This invention relates to a ROM module for sequence programs and, more particularly, to a ROM module for a sequence program on the basis of which sequence processing corresponding to a command issued by a numerical control unit is executed and the results of the processing are delivered to a machine side.

### Background Art

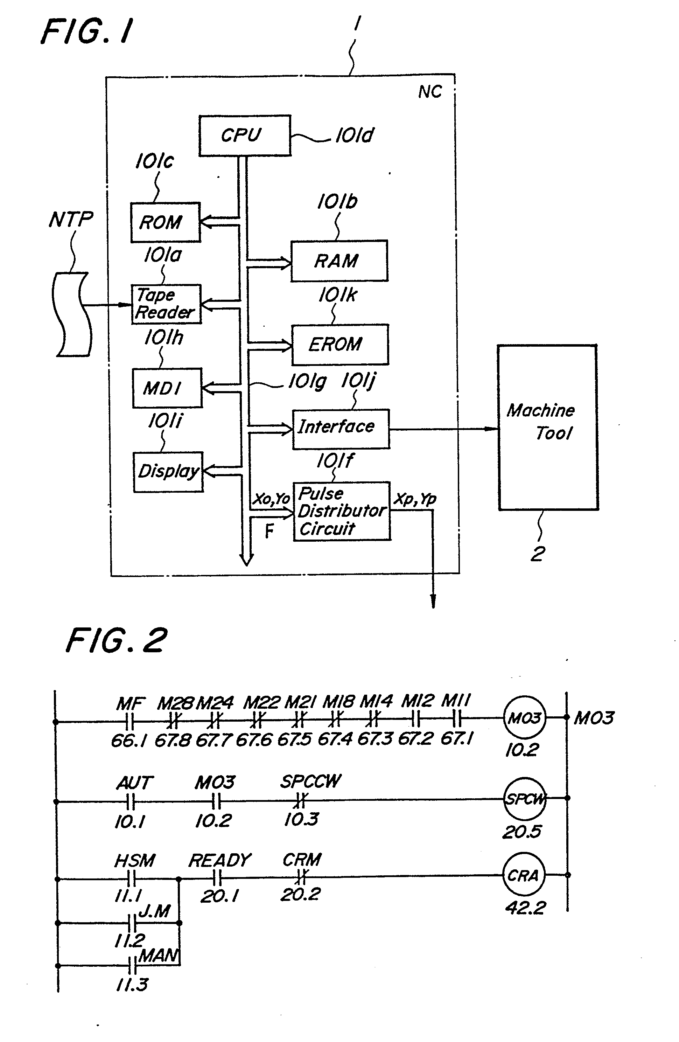

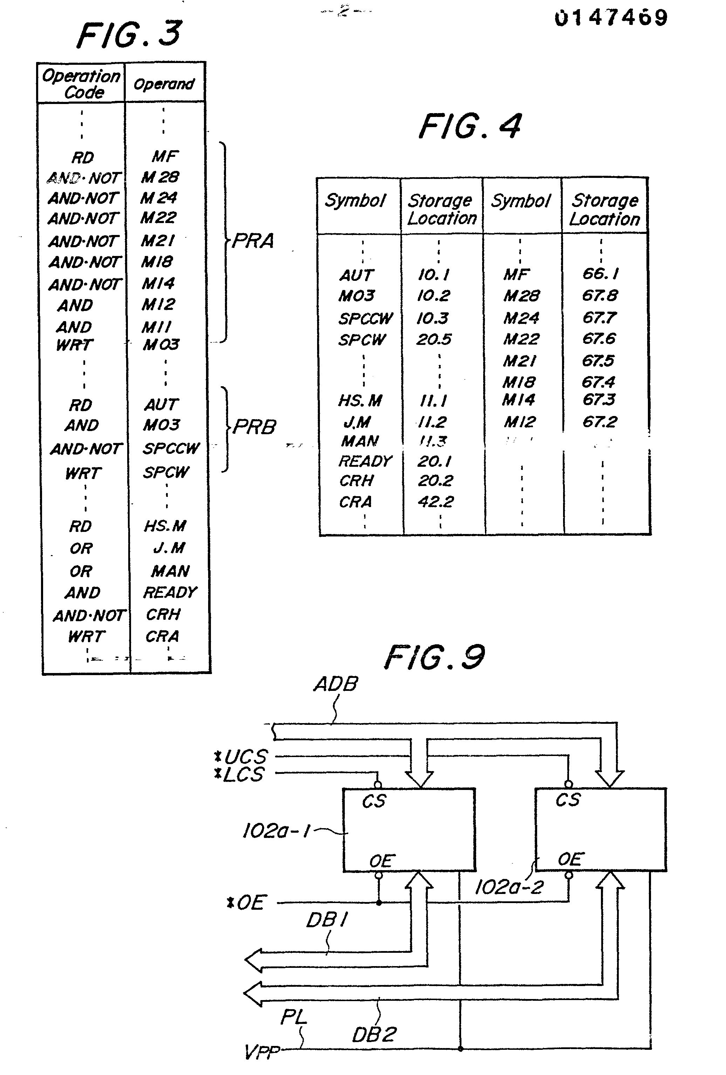

In a numerical control system, various mechanical elements in a machine tool are controlled on the basis of commands issued by an NC unit. Signals are exchanged between the NC unit and machine tool under the control of a sequence program. Fig. 1 is a block diagram of an NC unit which uses a sequence program. NTP represents an NC tape bearing punched NC data. Numeral 101a denotes a tape reader for reading the NC data from the paper tape, 101b a random access memory (RAM) for storing the NC data punched in the paper tape as well as the results of processing, 101c a read-only memory (ROM) storing a control program, 101d a central processing unit (CPU), 101f a pulse distributing arithmetic circuit which receives as inputs thereto X- and Y-axis travelling distances Xo, Yo and a feedrate F, for producing distributed pulses Xp, Yp by performing a well-known pulse distribution calculation, and 101g a bus line. Numeral 101h denotes a manual data input unit (MDI) mounted on an operator's panel and used for entering one block of NC data when, say, adding to or modifying the NC data. Numeral 101i represents a display unit, 101j an interface circuit, and 101k an EROM (erasable ROM) the storing the sequence program as well as a correspondence table between symbols, described below, and memory locations at which logic values of the symbols are stored. A sequence program performs the function of a magnetics circuit, which administers an exchange of data between the NC unit 1 and a machine tool 2, by expressing the function thereof in logical form using operation codes and operands which make up a program. By way of example, a ladder diagram constituting part of a magnetics circuit shown in Fig. 2 may be programmed as depicted in Fig. 3. It should be noted that RD, AND, WRT, OR, AND NOT, etc. in the sequence program are operation codes. RD is a read operation instruction, AND a logical product instruction, WRT a write operation instruction, OR a logical sum instruction, and AND NOT an instruction for logical multiplication with a negated value. Further, MF, M28,..., AUT, M03... are operands expressed by symbols, the logical values ("1" or "0") of the operands being stored in the RAM 101b at prescribed addresses and prescribed bits. Based on the group of instructions in the PRA section of the sequence program, the following logical operation is executed:

$$MF \cdot \overline{M28} \cdot \overline{M24} \cdot \overline{M22} \cdot \overline{M21} \cdot \overline{M18}\ \overline{M14}\ M12 \cdot M11$$

The result of the operation ("1" or "0") is stored in the RAM 101b at a prescribed bit of a prescribed address (second bit at address 10) corresponding to the operand M03 accompanying the write command WRT. Further, based on the group of instructions in the PRB section, the following logical operation is executed:

$$AUT \cdot M03 \cdot \overline{SPCCW}$$

The result of the operation is stored in the RAM 101b at a prescribed bit of a prescribed address (fifth bit at address 20) designated by the operand SPCW accompanying the write command WRT. As shown in Fig. 4, the correspondence table stored in the EROM 101k indicates the correspondence between the symbols MF, AUT,..., which are the operands of the sequence program instructions, and the storage locations of the relevant logical values in the RAM 101b. The logical value of the symbol AUT is stored at the first bit of address 10 of the data memory, the logical value of the symbol M03 is stored at the second bit of the address 10 and so on, with CRA being stored at the second bit of address 42. The ladder diagram of Fig. 2 shows the symbols matched with the corresponding storage locations. The processor 101d reads the sequence program instructions successively one at a time, executes sequence processing steps from the first instruction to the last sequence program instruction and, when processing of the last instruction is completed, returns to the first instruction of the sequence program. Thus the processor repeatedly performs the processing of the sequence program instructions in cyclic fashion and at high speed.

Now assume that, say, a command MO3 for forward spindle rotation is issued. When this takes place, logical "1" is stored at the bit positions (first bit of address 66 and the first and second bits of address 67 -- see Fig. 4) of the RAM 101b where the logical values of the symbols MF, M11 and M12 are to be stored, and logical "0" is stored at the other bit positions (third through eighth bits at address 67) of the RAM 101b.

Since the processor is executing sequence processing by repeatedly reading the instructions of the sequence program in cyclic fashion at high speed as described above, "1" will be stored in the fifth bit at address 20 of RAM 101b when the instructions (Fig. 3) of sections PRA, PRB of the sequence program have been executed. Thereafter, the status (SPCW = "1") of the fifth bit at address 20 is read out by another sequence program instruction and is delivered to the machine tool 1 via the interface circuit 101j. As a result, a corresponding relay in the machine tool 2 is turned ON so that control for forward spindle rotation is carried out. If the spindle is rotating in the forward direction, the machine 2 generates a forward rotation end signal. This signal is read via the interface

circuit 101j in response to a sequence program instruction and is stored in the RAM 101b at a prescribed bit. Thereafter, processing continues in accordance with another sequence program instruction and completion of forward spindle rotation is communicated to the NC unit 1. This ends the sequence process for forward spindle rotation.

As a general rule, the EROM 101k for storing such sequence programs and the like is prepared on the NC maker side and then supplied to the user (machine maker). Specifically, the NC maker supplies the user with a program for sequence program debugging, the debugged sequence program information and ladder diagram are accepted from the user side, the sequence program information is written into the EROM on the NC maker side, and the written EROM is supplied to the user. If a fault occurs, maintenance is performed by referring to the ladder diagram.

Regardless of the foregoing general rule, however, there are cases where the user purchases an EROM and writes the sequence program on his own, loads an NC unit with the EROM into which the sequence program has been written, ships the NC unit at his own discretion and, further, does not supply the NC maker with the ladder diagram.

The reasons why a user writes a sequence program into an EROM and then ships the NC unit of his own accord are as follows: (a) since it is necessary to modify a sequence program for each and every machine, too much time is required when this is asked of the NC maker, and (b) even in cases where it is necessary to make a specification modification or a modification stemming from a design error, too much time is required when this requested of the NC maker.

The reasons for not supplying the NC maker with the ladder diagram and the like (i.e., for not registering these with the NC maker) are as follows: (a) there are so many categories that registration is troublesome, (b) there are so many modifications that registration would not keep pace with them, and (c) the way in which a registration drawing is written is unclear.

However, faults are likely to occur when the user takes it upon himself to purchase an EROM, write in the sequence program or the like, mount the written EROM onto an NC unit and then ship the unit. The reason is that since the EROM is handled as a discrete commodity, the pins of the EROM become bent, the printed circuit board becomes flawed when it is pulled out, and the contact portions are touched by human hands. Another reason is that the EROM is subjected to writing and erasing conditions that are poor.

Further, failing to register a ladder diagram with the NC unit maker brings about a situation in which maintenance cannot be performed by the NC maker. Though a ladder diagram from a sequence program written into an EROM can be displayed, the entire ladder diagram cannot be viewed on the CRT display and it is difficult to give appropriate instructions. This inevitably makes maintenance a difficult operation.

Accordingly, an object of the present invention is to provide a ROM module for sequence programs which precludes a situation wherein a user takes it upon himself to purchase an EROM, write a sequence program into the EROM and then mount the EROM on an NC unit and ship the NC unit.

Another object of the present invention is to provide a highly reliable ROM module for sequence programs, which ROM module will not develop a fault even when a user takes it upon himself to write a sequence program in an EROM supplied by an NC maker.

A further object of the present invention is to provide a ROM module for sequence programs, which ROM module alleviates the baleful influences brought about when a user does not supply an NC maker with a ladder diagram.

Disclosure of the Invention

The present invention provides a ROM module for a sequence program on the basis of which sequence processing corresponding to a command issued by a numerical control unit is executed and the results of the processing are delivered to a machine side. The ROM module includes a ROM for storing a sequence program, a printed board on which the ROM is mounted, a case for accommodating the printed board, and a connector fitted onto the printed board and exposed from the case.  In response to a request from an external unit, a sequence program is read out of the ROM or written into the ROM via the connector. According to the present invention, only a ROM module having a prescribed structure can be loaded into a NC unit, so that an EROM purchased by the user at his own volition cannot be loaded into the NC unit.  This makes it possible to prevent a situation wherein the user takes it upon himself to purchase an EROM, write a sequence program into the EROM and then load the EROM into an NC unit and ship the NC unit.  As a result, the occurrence of ROM faults is eliminated, enabling an improvement in reliability.

Further, since the printed board on which the EROM is mounted is accommodated within the case, external forces will not act upon the contact portions of the EROM.  This also serves to improve reliability.

Brief Description of the Drawings

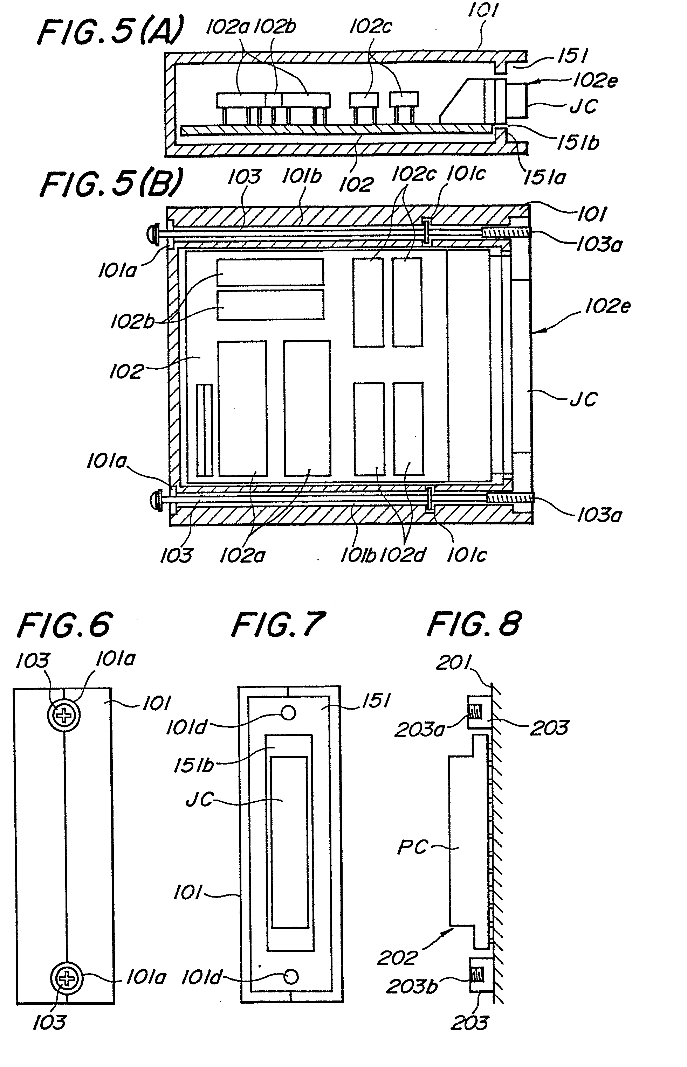

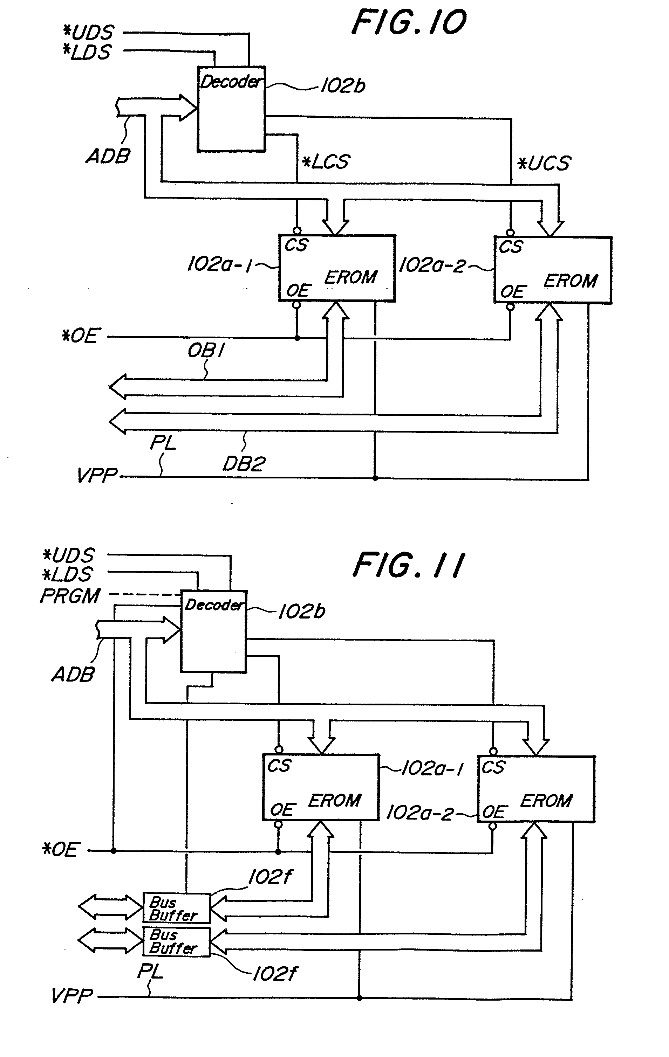

Fig. 1 is a block diagram of an NC unit which uses a sequence program, Fig. 2 is a circuit diagram of a magnetics circuit, Fig. 3 is a view for describing a sequence program, Fig. 4 is a view for describing a correspondence table, Figs. 5 through 8 are views for describing a ROM module according to the present invention, and Figs. 9 through 11 are circuit diagrams each showing a write/read control circuit formed on a printed board.

## Best Mode for Carrying Out the Invention

Figs. 5 through 7 are views for describing a ROM module in accordance with the present invention, in which Fig. 5(A) is a longitudinal sectional view, Fig. 5(B) is a transverse sectional view, Fig. 6 is a left side view, and Fig. 7 is a right side view.

Accommodated within a case 101 is a printed board 102 on which are mounted an EROM 102a, an address decoder 102b, an address buffer 102c and a data buffer 102d. The printed board 102 has an end portion on which there is mounted a connector 102e having a jack. Formed in the left side face of the case 101 are holes 101a, 101a (Fig. 6) for receiving screws 103, 103 passed therethrough. Guide portions 101b, 101b and stoppers 101c, 101c are formed in the interior of the case 101. Formed in the right side face of the case are holes 101d, 101d penetrated by threaded portions 103a, 103a of the screws 103, 103. A recess 151a [Fig. 5(A)] is formed in the right side face of the case. The recess 151 has a floor portion 151a provided with a rectangular opening 151b through which a jack portion JC of the connector 102e protrudes. A plug portion PC of a connector-with-plug 202 attached to a printed board 201, shown in Fig. 8, is inserted into the jack portion JC of the connector-with-jack 102e situated in the recess 151. The printed board 201 and the printed board 102 are thus electrically connected. Accordingly, a sequence program is capable of being written into the EROM 102a from the outside, and it is also possible to read a sequence program output of the EROM 102a. The threaded portions 103a, 103a of the screws 103, 103 project from the holes 101d, 101d and mate with female screw portions 203a, 203b, which are formed in posts 203 erected on the printed board 201, thereby securing the ROM module in place. It should be noted that the EROM 102a, address decoder 102b, address buffer 102c and data buffer 102d shown in Fig. 5 need not all be mounted on the printed board 102; it will suffice if at least the EROM is so mounted.

Fig. 9 is a circuit diagram of a printed board on which only two EROMs 102a-1, 102a-2 are mounted. ADB represents an address bus, and DB1, CB2 denote data buses. If an address signal is generated on the address bus ADB under a condition in which a low-level signal (*UCS, *LCS, *OE) is being applied to a chip select terminal CS and output enable terminal OE of one of the EROMs, data will be delivered to the data bus DB1 or DB2 from a prescribed address of EROM 102a-1 or 102a-2. If an address signal is generated under a condition in which the EROMs are being provided with a program voltage Vpp from a line PL and a low-level signal *USC or *LCS is being applied to the chip select terminal CS of one of the EROMs, then data on the data bus DB1 or DB2 will be stored in the EROM 102a-1 or 102a-2 at a prescribed address thereof.

Fig. 10 is a circuit diagram of a printed board on which the address decoder 102b is mounted in addition to the EROMs 102a-1, 102a-2 of Fig. 9. The address decoder 102b generates chip select signals *UCS, *LCS by using an upper byte select signal *UDS, lower byte select signal *LDS and an address signal.

Fig. 11 is a circuit diagram of a printed board on which bus buffers 102f, 102f are additionally mounted. Here an EEROM (electrically erasable ROM) and an EPROM (electrically programmable ROM) serve as the EROMs.

As set forth above, an EROM is housed within a case to form a module which is provided to the user. The user is also provided with a ROM writer, eraser, etc. By doing so, a sequence program can be written into the EROM on the user side by employing the ROM writer and eraser. Such a configuration also assures that writing and erasing will take place under optimum conditions, so that the reliability of the EROM can be improved.

According to the present invention as described above, a printed board on which is mounted an EROM for storing a sequence program is accommodated within a case, and the arrangement is such that the contact portion of the EROM cannot be readily touched by hand from outside the case. This enhances the reliability of the EROM even further. Moreover, by placing the EROM in the case, the EROM can be written solely by use of the ROM writer and eraser supplied by the NC maker.

This makes it possible to set up the optimum writing and erasing conditions (writing level, erasing level and the like) to provide greater reliability. Furthermore, since the structure is such that the NC unit is capable of receiving solely the ROM module enclosed by the case, a situation is prevented in which the user takes it upon himself to purchase an EROM, write in a sequence program and then mount the EROM on an NC unit and ship the unit. This permits an improvement in reliability. Since reliability is enhanced in this manner, the occurrence of faults is eliminated so that there are fewer harmful effects caused by non-registration of ladder diagrams.

Industrial Applicability

    A ROM module for storing sequence programs in accordance with the present invention is well-suited for use in an NC unit or the like.

-13- 0147469

CLAIMS:

1.   A ROM module for a sequence program, characterized by having a ROM for storing a sequence program on the basis of which sequence processing corresponding to a command issued by a numerical control unit is executed and the results of the processing are delivered to a machine side, a printed board on which said ROM is mounted, a case for accommodating said printed board, and a connector fitted onto the printed board and exposed from the case, wherein a sequence program is read out of the ROM or written into the ROM via said connector.

2.   A ROM module for a sequence program according to claim 1, characterized in that two or more ROMs are mounted on said printed board, as well as an address decoder for generating a ROM select signal.

3.   A ROM module for a sequence program according to claim 2, characterized in that a bus buffer is mounted on said printed board.

4.   A ROM module for a sequence program according to claim 1, characterized in that a recess is formed in one face of the case and said connector is situated in said recess.

5.   A ROM module for a sequence program according to claim 1, characterized by being mounted in an NC device via a receptacle provided on said NC device.

## FIG. 1

## FIG. 2

## FIG. 3

| Operation Code | Operand |
|---|---|
| ⋮ | ⋮ |
| RD | MF |
| AND·NOT | M28 |
| AND·NOT | M24 |
| AND·NOT | M22 |
| AND·NOT | M21 |
| AND·NOT | M18 |
| AND·NOT | M14 |
| AND | M12 |
| AND | M11 |
| WRT | M03 |
| ⋮ | ⋮ |
| RD | AUT |
| AND | M03 |
| AND·NOT | SPCCW |
| WRT | SPCW |
| ⋮ | ⋮ |
| RD | HS.M |
| OR | J.M |
| OR | MAN |
| AND | READY |
| AND·NOT | CRH |
| WRT | CRA |
| ⋮ | ⋮ |

PRA brackets rows RD MF through WRT M03.
PRB brackets rows RD AUT through WRT SPCW.

## FIG. 4

| Symbol | Storage Location | Symbol | Storage Location |
|---|---|---|---|
| ⋮ | ⋮ | ⋮ | ⋮ |
| AUT | 10.1 | MF | 66.1 |
| M03 | 10.2 | M28 | 67.8 |
| SPCCW | 10.3 | M24 | 67.7 |
| SPCW | 20.5 | M22 | 67.6 |
| ⋮ | ⋮ | M21 | 67.5 |
| HS.M | 11.1 | M18 | 67.4 |
| J.M | 11.2 | M14 | 67.3 |
| MAN | 11.3 | M12 | 67.2 |
| READY | 20.1 | ⋮ | ⋮ |
| CRH | 20.2 | | |
| CRA | 42.2 | | |
| ⋮ | ⋮ | | |

## FIG. 9

FIG.5(A)

102a 102b  102c  101  151  102e  JC  151b  151a

FIG.5(B)

103  101b  102  102c  101c  101  103a  101a  102b  102e  102  JC  101a  103a  103  102a  101b 102d  101c

FIG.6

103  101a  101  101a  103

FIG.7

151  101d  151b  JC  101  101d

FIG.8

201  203a  203  PC  202  203b  203

## FIG. 10

## FIG. 11

# INTERNATIONAL SEARCH REPORT

0147469

International Application No. PCT/JP84/00273

## CLASSIFICATION OF SUBJECT MATTER (if several classification symbols apply, indicate all) 3

According to International Patent Classification (IPC) or to both National Classification and IPC

Int. Cl$^3$   G05B 19/02

## I. FIELDS SEARCHED

### Minimum Documentation Searched 4

| Classification System | Classification Symbols |
|---|---|
| IPC | G05B 19/00 – 19/42 |

### Documentation Searched other than Minimum Documentation to the Extent that such Documents are Included in the Fields Searched 5

| | |
|---|---|
| Jitsuyo Shinan Koho | 1932 – 1984 |
| Kokai Jitsuyo Shinan Koho | 1971 – 1984 |

## II. DOCUMENTS CONSIDERED TO BE RELEVANT 14

| Category* | Citation of Document, 16 with indication, where appropriate, of the relevant passages 17 | Relevant to Claim No. 18 |
|---|---|---|
| X | JP, A, 55-88102 (Omron Tateisi Electronics Co.) 3 July 1980 (03. 07. 80), Fig. 4 | 1 – 5 |
| A | JP, A, 54-116585 (Omron Tateisi Electronics Co.) 10 September 1979 (10. 09. 79), Fig. 1 | 1 – 5 |
| A | JP, A, 53-16176 (Toshiba Corp.) 14 February 1978 (14. 02. 78) | 1 – 5 |

* Special categories of cited documents: 15

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search 2 | Date of Mailing of this International Search Report 2 |
|---|---|
| August 17, 1984   (17. 08. 84) | August 27, 1984   (27. 08. 84) |

| International Searching Authority 1 | Signature of Authorized Officer 20 |
|---|---|
| Japanese Patent Office | |

Form PCT/ISA/210 (second sheet) (October 1981)